# EUROPEAN PATENT APPLICATION

(11) **EP 1 227 696 A2**
(43) Date of publication of application: **31.07.2002**
(21) Application number: 02001566.5
(22) Date of filing: 23.01.2002
(51) Int. Cl.: H04Q 7/38

(54) **Method for the transmission of authorizations to use the channel in point-to-multipoint systems with different physical modes**

(30) Priority: 29.01.2001 IT MI010148
(71) Applicant: Siemens Information and Communication Networks S.p.A., 20126 Milano (IT)
(72) Inventor: Cavalli, Giulio, 20161 Milano (IT); Licitra, Gaspare, 20064 Gorgonzola (IT); Santacesaria, Claudio, 20139 Milano (IT)
(74) Representative: Giustini, Delio

(57) **Abstract**

In transmission systems with point-to-multipoint topology one master station and one or more terminal stations are defined and it is also defined downstream channel, the one running from the master towards the terminals and upstream channel the one from the terminals to the master. In these systems, the use of the upstream channel is coordinated by the master station, which assigns the authorization to use the same channel to single terminals through appropriate authorization messages.

The present invention defines a new format for said messages, resulting particularly efficient should the upstream channel slots have variable duration with a limited number of different discrete values; this situation occurs for instance when the information field of the slot has fixed length in bytes while the physical transmission mode, that is modulation scheme and/or error correction code, is different. According to the invention said authorization messages include, in addition to the usual "identification of the authorized terminal" field, a specific "authorization type" field, which includes an information enabling to obtain the slot duration in an unambiguous manner, without explicitly transmitting neither the duration itself, nor the starting positions of the slots. In the above-mentioned example, said information could be the physical transmission mode of the slot, appropriately coded (Figure 1).

## Description

### FIELD OF THE INVENTION

The present invention finds particular application in point-to-point or point-multipoint radio transmission systems, but also in other transmission fields based on different physical means, such as optical fibre, coaxial cable and copper twisted pair.

### BACKGROUND OF THE INVENTION

In transmission systems with point-multipoint topology, whichever the used physical layer, a 'master' station and one or more 'slave' stations, also called 'terminals', are generally defined. The following depiction refers to point-multipoint radio systems even if it has not to be construed as restrictive, since the invention can also be applied to systems on other physical means such as for instance optical fibre or copper twisted pair.

Moreover, the invention is also described referring to a TDMA (Time Division Multiple Access) access technique, but also in this case it is not to be intended as restrictive, since the invention can profitably be applied also to other access techniques such as the FDMA (Frequency Division Multiple Access) or CDMA (Code Division Multiple Access) technique.

The communication from the master towards one or more slave stations takes place on a unique logic channel, defined 'downstream', inside which the master station multiplexes, generally time-division, the traffic for the different stations.

The traffic of 'slave' stations towards the 'master' station takes place on another channel, called 'upstream' channel. This upstream channel can be frequency- or time-divided from the downstream one, that is, transmissions in upstream direction can occur at the same radio frequency in different time slots or at different radio frequencies.

Other separation ways can be used between the upstream and downstream logic channels for other physical layers.

A problem common to all the applications in which the upstream channel is shared among more 'slave' transmitting stations is to coordinate the access to said channel.

Generally, the master station grants the slave stations the authorizations to occupy the upstream channel in specific time slots. Said authorizations relevant to the occupation of the upstream channel are sent on the downstream channel.

Known art offers a wide range of systems of this type. As an example we mention the patent Italian application No. Ml 2000°001361 under the title "Point-to-point and point-multipoint radio transmission system with burst transmission" in the name of the same applicant.

Said authorizations usually contain the identifier of the terminal which the authorization is released to and, explicitly or implicitly, the position in which the terminal is enabled to transmit. For instance, in the above mentioned invention, the authorization contained, in addition to an identifier field of the authorization type, only the identifier of the terminal and the position was implicitly obtained from the position that the authorization occupied on the downstream channel, that is, the authorization was relevant to a fixed duration slot of the upstream channel whose temporal position was in fixed relation with the position of the authorization itself inside the downstream channel.

In other more traditional systems it is defined a frame structure and the authorizations relevant to an upstream frame are transmitted all together one after the other; also in this case the order of authorizations, containing only the terminal identifier, implicitly carried the information about the position, inside the upstream frame, in which the terminal is enabled to transmit; for instance the third authorization is relevant to the third slot in the upstream frame. Also in this case slots have fixed size.

There are also systems in which slots have variable size; in this case authorizations contain, in addition to the terminal identifier also the starting position (expressed for instance as number of bytes from the start of frame) starting from which the terminals can transmit and the slot length (expressed for instance as number of bytes) assigned to the same; the last information can also be implicitly obtained as difference between successive starting positions.

In the case of new generation systems, in which slots have fixed dimension for the number of bytes, but variable for the duration, due to the use of different modulation formats or different channel coding, the last described system, with explicit indication of the starting position, can also be employed but it turns out to be inefficient.

It must be noticed that in all the previously described cases, in addition or as an alternative to the terminal identifier, the connection identifier can be transmitted; this choice enables to authorize a terminal to transmit traffic belonging only to a specific, and not to any, connection; said choice is separate from the object of the present invention, therefore reference shall be made hereafter only to the terminal identifier being intended that said identifier could be combined with or replaced by a connection identifier, without affecting the content of the invention by that choice.

### OBJECT AND SUMMARY OF THE INVENTION

This invention refers to the transmission of authorizations to occupy the uplink channel in point-multipoint systems and shows its benefits in case of uplink channel divided into slots, each one including an information unit; said information unit consisting of a constant number of bits, but having variable duration due to the different modulation format or different channel coding, that is, in a word, of the physical transmission mode.

More in general, the invention is useful in all the cases in which the duration of the assigned slots is not completely arbitrary but can assume only some discrete values, known in advance.

For known in advance, it is intended that the same are known, at the moment the authorization itself is released, both to the master station and to terminal stations; these values can be changed during the system operation through configuration messages.

The invention consists in a transmission format of the authorizations that results particularly efficient in case the above-mentioned conditions, of discretely variable duration of slots, are met.

The featuring aspect of the invention consists in transmitting, also in this case as in the case of fixed size slots, the sole "terminal identifier" and "type of the authorization" fields; the "type" field will contain among other things, an identifier of the physical mode and therefore, implicitly, the value of the slot duration. Said identifier will generally result to be shorter than the "starting position" information which was otherwise necessary in the systems preceding this invention. Therefore, the invention enables to reduce the overhead.

Each terminal station will be able to obtain the length of each slot from the "type" field and from the identifier of the physical mode contained in the same and will therefore obtain the starting position that turns out to be transmitted in implicit mode.

The invention can be banally extended to the cases in which the slots contain a variable number of information units, each one containing a fixed number of information bits; in this case, a 'number of information units' field can be added to the fields previously indicated.

### BRIEF DESCRIPTION OF DRAWINGS

The invention, together with additional objects and advantages thereof can be understood from the following description accompanied with the attached drawings, in which:
**Figure 1** shows the format of the single authorization according to the invention.
**Figure 2** shows the format of the single authorization according to the known art.
**Figure 3** shows how more authorizations, relevant to a frame, are transmitted in a sort of descriptive map of the upstream frame.

### DESCRIPTION OF A PREFERRED EMBODIMENT OF THE INVENTION

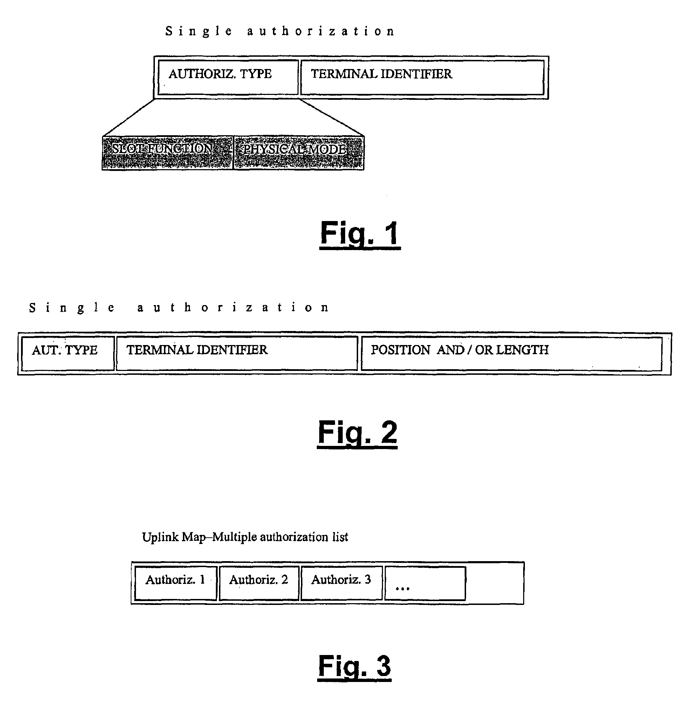

Figure 3 shows the classical aspect of a descriptive map of the uplink: it consists of an authorization list; the format of each one of said authorizations, according to the known art, is shown in figure 2.

Said format includes a "terminal identification" field containing information bits whose combination enables to identify the terminal or terminals, which said authorization refers to. The authorization can be destined to a single terminal (unicast), to a plurality of terminals (multicast) or to all the terminals (broadcast). In case of multicast and broadcast, the uplink channel, in those particular slots, is contention controlled.

Said format includes also an "authorization type" field containing the information bits whose combination enables to identify the function for which the grant is released; examples of functions are "slot destined to the transmission of user data" or "slot destined to the transmission of bandwidth requests" or "slot destined to the transmission of control information".

Said format also includes, in the known art, a "Starting position" field in addition or as an alternative to a "Length" field; said position and length fields are necessary only when slots have variable temporal duration.

According to the invention (figure 1) the "Authorization Type" field includes, in addition to said information bits identifying the slot function, other information, carried by the same or by other bits, identifying the physical transmission mode, that is the used modulation and error correction code.

The combination of information on the slot function and on its physical mode implicitly identifies the slot duration in many practical cases; in this way, it is not necessary to transmit the "Position" or "Length" fields, thus saving overhead.

The invention extends to all the cases in which the "Slot type" field can identify the length of the slot itself inside a set of possible lengths known in advance or that can be calculated by the terminal stations.

In a preferred embodiment of the invention, referred to a practical case of point-to-multipoint radio transmission, the "Type" field (Figure 1) consists of 4 bits identifying 16 different categories, each of them identifying a function of the slot and a physical mode; the slots of each class have a fixed duration, known by the terminals at the time when they receive the uplink descriptive map. The terminal identifier consists of 10 bits.

With 14 bits in total for any item of the map, all the necessary information is supplied. For instance, the terminal that has received the fifth authorization inside the map, could calculate the duration of the slots assigned to the first four terminals and therefore knows the starting position of its transmission.

In the known art (Figure 2), a "Position" field of 12 bits at least would have been used, the identifier field of the terminal would have been 10 bits and the "Type" field could have been reduced to 2 bits for a total of 24 bits. In other implementations, the identifier field of the terminal can be 16 bits instead of 10.

A further advantage of the present invention is that the 2 bits for the extension of the "Type" field, necessary to the transmission of the "physical mode" associated to any authorization, enable the master station to control very quickly the switching of these physical modes in adaptive mode. There are also other ways to obtain this result, but none of those presently known is so fast. If the teachings that can be obtained from the present patent application are then combined with the teachings of the Italian patent application No. VA2000A000029 under the title "POINT-TO-POINT AND POINT-MULTIPOINT RADIO TRANSMISSION SYSTEM, WITH TDM AND TDMA

STRUCTURE INTEROPERABLE WITH DIFFERENT PHYSICAL MODES" in the name of the same applicant and whose description has to be intended as expressly incorporated in the present application, the advantages combine and it is also possible to have the immediate confirmation of the correct reception by the terminal of the indication of the physical mode to utilize. Moreover, the differentiated preamble enables to simplify the implementation of the demodulator and decoder of the master, which does not need to receive the information on the physical mode from its scheduling function, thus maintaining the uplink and downlink processing separate.

Should the slot be able to contain a variable number of information units, always having fixed dimension, though the advantages of this invention are lower, its applicability will not be precluded since it is sufficient to add a 'number of information units' field to the authorization, which, together with the previously described fields, enables to extend to this case at least part of the advantages of the present invention.

Though the invention is described referring to its preferred embodiment, it is evident that variants and modifications are possible for a field technician, without departing from the protections of the following claims.

## Claims

1. Transmission system with Point-to-multipoint topology of the type including:
• a master station;
• a plurality of slave stations;
• means allocated in the slave stations to share a unique upstream radio channel through which slave stations send information units to the master station;
• means allocated in the master station to assign the use of portions, called slots, of said upstream radio channel to the different slave stations, that is, suitable to generate a descriptive map of said unique upstream radio channel, which is transmitted by the master station to slave stations through another radio channel called downstream, said map including a plurality of authorizations, each one including a first information field containing bits whose combination enables to identify at least the slave station authorized to use said portions of said upstream radio channel and a second information field containing bits whose combination enables to identify the function for which the authorization is granted,
**characterized in that** in said second information field it is allocated a string of bits implicitly identifying both the above mentioned function and the duration of the slot that the slave station identified by the content of said first information field is authorized to occupy to transmit on the upstream channel.

2. The system of claim 1, **characterized in that** said slot that the slave station identified by the content of said first information field is authorized to occupy on the upstream channel, is a time slot having variable duration in a discrete set of values known in advance.

3. The system of claim 2, **characterized in that** said slots are suitable for the transmission of an information unit including a constant number of bits, but have variable duration due to the different operating physical mode, said physical mode alternatively or jointly including the modulation scheme and the error correction code.

4. The system of claim 1 or 2, **characterized in that** the duration of said slot is such to include a variable number of information units, each one including a constant number of bits and said second information field includes bits identifying said number of information units.

5. The system of claim 3 or 4, **characterized in that** said second information field includes a sub-field identifying the operating physical mode, that is identifying the modulation type and error correction code to be used by the slave station to transmit information units on said upstream channel when on said upstream channel an adaptive modulation and/or adaptive error correction code transmission system is used.

6. The system according to one of the previous claims **characterized in that** each slave station calculates the instant at which it could start the transmission on the upstream channel, adding and letting the duration elapse for all the authorizations that in the above mentioned map precede their own authorization, starting from a starting instant known in advance.

7. The system according to claim 6, **characterized in that** each slave station adds to the above mentioned sum a guard time known in advance.

8. The system according to claim 5, **characterized in that** said sub-field includes 4 bits identifying 16 different classes, each of them identifying a function of the slot and a physical mode.

9. The system according to claim 1, **characterized in that** said first information field includes 10 bits.

10. The system according to claim 1, **characterized in that** said first information field includes 16 bits.
